(19) Europäisches Patentamt / European Patent Office / Office européen des brevets

(11) **EP 2 958 856 B1**

(12) **FASCICULE DE BREVET EUROPEEN**

(45) Date de publication et mention de la délivrance du brevet:
**28.08.2019 Bulletin 2019/35**

(21) Numéro de dépôt: **14705329.2**

(22) Date de dépôt: **18.02.2014**

(51) Int Cl.:
*C01F 5/16* *(2006.01)*    *C01F 11/00* *(2006.01)*
*C01F 11/02* *(2006.01)*    *C04B 2/06* *(2006.01)*

(86) Numéro de dépôt international:
**PCT/EP2014/053053**

(87) Numéro de publication internationale:
**WO 2014/128092 (28.08.2014 Gazette 2014/35)**

(54) **PROCEDE D'EXTINCTION EN VOIE SECHE D'OXYDES DE CALCIUM ET MAGNESIUM PROVENANT DE COMPOSES CALCO-MAGNESIENS**

VERFAHREN ZUR TROCKENLÖSCHEN VON CALCIUMOXIDEN UND MAGNESIUM AUS CALCOMAGNESIUMHALTIGEN VERBINDUNGEN

METHOD FOR THE DRY SLAKING OF CALCIUM OXIDES AND MAGNESIUM FROM CALCOMAGNESIAN COMPOUNDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2013 BE 201300106**

(43) Date de publication de la demande:
**30.12.2015 Bulletin 2015/53**

(73) Titulaire: **S.A. Lhoist Recherche et Développement**
**1342 Ottignies-Louvain-la-Neuve (BE)**

(72) Inventeurs:
• **GÄRTNER, Robert, Sebastian**
  **B-1501 Buizingen (BE)**
• **LORGOUILLOUX, Marion**
  **B-7110 Strépy-Bracquegnies (BE)**

(74) Mandataire: **Gevers Patents**
**Intellectual Property House**
**Holidaystraat 5**
**1831 Diegem (BE)**

(56) Documents cités:
**WO-A1-92/09528        WO-A1-98/51614**
**WO-A2-2005/014483    FR-A1- 2 669 327**
**US-A- 1 856 763        US-A- 3 120 444**
**US-A- 5 502 021**

• **Johan B Holmberg: "Slaking of lime", , 16 décembre 2004 (2004-12-16), XP055114422, Extrait de l'Internet: URL:http://www.chemeng.lth.se/exjobb/009.p df [extrait le 2014-04-16]**

**Description**

La présente invention se rapporte à un procédé d'extinction en voie sèche d'oxydes de calcium et magnésium de composés calco-magnésiens, contenant de préférence au moins 10 % en poids de MgO par rapport au poids total dudit composé calco-magnésien comprenant les étapes de :

-   une alimentation en composé calco-magnésien contenant du MgO dans un équipement d'extinction,
-   une alimentation en phase aqueuse d'extinction dans ledit équipement d'extinction, et
-   une extinction desdits oxydes de calcium et magnésium dudit composé calco-magnésien amenés dans ledit équipement d'extinction, par ladite phase aqueuse d'extinction, avec formation de particules solides éteintes d'hydroxydes de calcium et magnésium (par exemple de formule générale $xCa(OH)_2.yMg(OH)_2$).

Typiquement l'extinction de l'oxyde de magnésium MgO pour former de l'hydroxyde de magnésium $Mg(OH)_2$, en comparaison d'une extinction conventionnelle de CaO pour former du $Ca(OH)_2$, est une réaction difficile à mettre en oeuvre industriellement de manière rentable. Une des voies possibles pour produire des produits complètement hydratés, à savoir dans lesquels le MgO et la CaO sont complètement convertis respectivement en $Mg(OH)_2$ et en $Ca(OH)_2$, est l'hydratation à haute pression, lors de laquelle un apport de chaleur est parfois nécessaire, en fonction de la réactivité du MgO. Dans certains cas, lors de l'extinction en voie humide, des temps de réaction très longs peuvent pallier ces inconvénients. Toutefois, l'utilisation d'hydrateurs à haute pression, avec ou sans apport calorifique, ou encore des temps de réaction longs sont autant d'obstacles qui réduisent l'exploitation industrielle de l'hydroxyde de magnésium à partir de MgO, la préférence allant vers la production chimique des $Mg(OH)_2$ à partir de sels traités par des solutions caustiques.

Tout comme il existe des gisements de calcaire (carbonate de calcium de formule $CaCO_3$), il existe des gise-ments de dolomie (carbonate mixte de calcium et de magnésium de formule générale $xCaCO_3.yMgCO_3$ avec x et y coefficients molaires tels que x/y = 0,8 à 1,2) et des gisements d'autres carbonates mixtes de formule générale $xCaCO_3.yMgCO_3$ dans laquelle $1,2 \leq x/y \leq 25$) ou de tout autre carbonate mixte de calcium et magnésium. Tout comme les calcaires, les dolomies ou autres carbonates mixtes précités peuvent être calcinés, produisant ainsi de la dolomie vive de formule $xCaO.yMgO$ ou tout autre oxyde mixte de calcium et magnésium. De la même manière que pour les chaux vives, une réaction d'hydratation va s'amorcer lorsqu'une dolomie vive ou autre oxyde mixte précité est mis en contact avec de l'eau. Toutefois, comme mentionné ci-dessus, il est connu que la réactivité à l'eau de l'oxyde de magnésium est beaucoup plus faible que celle de la chaux vive calcique, très hydrophile, l'hydratation de ces composés vifs s'en trouvant beaucoup plus complexe que l'hydratation d'une chaux vive calcique.

Pour cette raison, dans la grande majorité des cas, la dolomie hydratée ou autre hydroxyde mixte de calcium et magnésium produit industriellement en voie sèche est en réalité une dolomie semi-hydratée ou autre hydroxyde mixte précité, contenant une quantité non négligeable de MgO résiduel non hydraté. La dolomie semi-hydratée susdite est généralement représentée par les formules $xCa(OH)_2.yMgO$ ou $xCa(OH)_2.(y-z)Mg(OH)_2.zMgO$ selon le taux d'hydratation de l'oxyde de magnésium (avec x/y = 0,8 à 1,2). Les autres hydroxydes mixtes précités ont des formules du même type, mais avec des rapports molaires calcium/magnésium différents.

Pour pallier cette faible réactivité de la dolomie vive ou autre composé vif précité vis-à-vis de l'eau dans le but d'obtenir des produits totalement hydratés (de formule générale $xCa(OH)_2.yMg(OH)_2$), il est connu d'avoir recours à une quantité d'eau nettement plus importante que la quantité d'eau utilisée pour une extinction par voie sèche et/ou à des températures plus élevées que celles auxquelles ont lieu les réactions d'hydratation standards pour la chaux vive, à un broyage de la dolomie vive ou autre composé vif précité préalablement à son hydratation, voire à une réaction hydrothermale, c'est-à-dire à une hydratation sous pression à haute température (sous vapeur d'eau, 7-13 bars, 115-165 °C) (Boynton, Chemistry and Technology of Lime & Limestone, 2ème édition, Wiley Interscience, pp. 325-326 et pp 374). Un produit dolomitique de ce type, totalement hydraté, est connu sous le nom de Type S, terme à opposer à Type N qui représente les hydrates dolomitiques normaux c'est-à-dire partiellement hydratés (OATES, J.A.H., Lime and limestone, Weinheim : Wiley-VCH, 1998, pp. 222-223).

Dans tous les cas, ces procédés d'extinction sont complexes et coûteux, et réduisent l'exploitation industrielle de ces composés contenant du MgO.

FR2669327 A1 enseigne l'utilisation d'agents chimiques tels que des amines ou des glycols pour produire une chaux hydratée à température réglée ou maitrisée possédant de meilleures propriétés plastiques et des surfaces spécifiques élevées.

WO9209528 A1 concerne également l'utilisation d'additifs choisis parmi les glycols et/ou les amines pour produire des hydroxydes de calcium et/ou de magnésium présentant des surfaces spécifiques élevées.

US3120444 divulgue l'ajout d'alcools aliphatiques à faible poids moléculaire pour obtenir une chaux hydratée avec des meilleures propriétés plastiques.

US1856763 divulgue une méthode pour produire de la chaux vive de haute pureté et avec une réactivité retardée pour son utilisation dans les mortiers.

L'invention a pour but de pallier les inconvénients de l'état de la technique en procurant un procédé permettant de produire en voie sèche de manière simple, peu couteuse, qui peut être mise en oeuvre de manière industrielle, un composé contenant des particules solides éteintes de $Mg(OH)_2$, dans lequel l'hydratation est accélérée et/ou dans lequel le degré de conversion de l'oxyde de magnésium MgO en hydroxyde de magnésium $Mg(OH)_2$ est augmenté. Pour résoudre ce problème, il est prévu suivant l'invention, un procédé tel qu'indiqué au début dans lequel la phase aqueuse est alimentée dans ledit equipement d'extinction de façon que le rapport massique entre l'eau et le composé calco-magnésien contenant du MgO est inférieur à 1,5 et ladite extinction est réalisée en présence d'un additif choisi dans le groupe constitué des hydroxydes métalliques solubles dans l'eau, notamment des hydroxydes alcalins (en particulier les hydroxydes de Na, Li ou K et plus particulièrement le NaOH), des silicates métalliques solubles dans l'eau, notamment des silicates alcalins ou alcalino-terreux solubles dans l'eau (en particulier les silicates alcalins de Na, Li ou K et plus particulièrement les silicates de Na), des aluminates solubles dans l'eau, et de leurs mélanges.

Au sens de la présente invention, par les termes « solubles dans l'eau », on entend que les additifs sont au moins partiellement solubles dans l'eau. La vitesse de la solubilité des additifs ne doit également pas forcément être élevée, les additifs étant susceptibles de se solubiliser au cours de la réaction d'extinction.

Les additifs choisis dans le groupe susdit présentent l'avantage de permettre une hydratation accélérée et/ou améliorée à pression ambiante du composé contenant du MgO avec des temps de réaction relativement brefs. Par conséquent, la réaction d'extinction en présence desdits additifs devient exploitable industriellement et permet de produire ainsi des composés comprenant des particules solides éteintes, de manière simple et peu onéreuse.

Avantageusement, lesdits oxydes de calcium et magnésium de composé calco-magnésien présentent une teneur en oxyde de magnésium inférieure à 50 % en poids par rapport au poids dudit composé calco-magnésien, et présentent de préférence un rapport molaire calcium/magnésium compris entre 0,8 et 1,2.

Plus particulièrement, ledit composé calco-magnésien est choisi dans le groupe constitué de la dolomie vive, semi calcinée ou semi hydratée, des composés mixtes calco-magnésiens, en particulier des oxydes mixtes de calcium et de magnésium, dont la teneur en MgO est substantielle, à savoir supérieure à 10 % en poids par rapport au poids total de l'oxyde mixte, et leurs mélanges.

L'hydratation de dolomie vive et de toutes matières présentant une proportion élevée en MgO (à savoir au moins 10 % par rapport au poids total du composé calco-magnésien ou dans certaines formes de réalisation par rapport au poids total d'oxyde mixte) est incomplète dans des procédés industriels conventionnels et requiert soit des matériaux moins cuits (soft bumed dolime) pour obtenir des taux de conversion acceptables soit des temps de réaction longs et peu adaptés à un procédé industriel.

Cette faible réactivité de la partie MgO est couramment expliquée par la présence de produits surcuits (overburned) à cause de la sensibilité de l'oxyde de magnésium pendant le procédé de calcination. Dans le cas des produits dolomitiques, cette surcuisson est typiquement le résultat d'un besoin d'appliquer des températures permettant au moins partiellement d'obtenir également la conversion du carbonate de calcium ($CaCO_3$) en oxyde de calcium (chaux vive).

De ceci, il résulte, dans la pratique industrielle de l'hydratation de dolomie vive, de chaux dolomitique ou de chaux magnésienne, mais également pour tout produit similaire contenant des quantités susbstantielles de MgO, en fonction de la perte de réactivité causée par la surcuisson, que de plus faibles taux de conversion en $Mg(OH)_2$ sont obtenus lors de l'extinction en voie sèche.

Alternativement, l'application de conditions d'extinction extrêmes peut être requise pour obtenir un produit davantage hydraté comme l'application de hautes pressions, des temps de réaction de plus de 24 heures ou encore une hydratation à la vapeur, en fonction des degrés de surcuisson pour les produits d'origine minérale.

Il est en effet de notoriété publique (voir Boynton pp. 374-376) que les dolomies qui peuvent être majoritairement hydratées en voie sèche à pression atmosphérique, quelle que soit la durée de l'hydratation, sont plutôt rares. Dans un tel cas, la réaction d'extinction est réalisée en silo avec un excès d'eau pendant des durées de l'ordre de 10 à plus de 24 heures, ce qui met en péril l'exploitation industrielle rentable de telles réactions d'extinction. Typiquement, la plupart des dolomies hydratées contiennent de faibles teneur en $Mg(OH)_2$ et en général seuls 10 à 25 % du MgO sont hydratés, parfois moins de 10%, voire moins de 5% sont hydratés. Ceci est particulièrement vrai dans le cas des hydratations en voie sèche ; les hydratations en voie humide pouvant conduire à une hydratation plus importante du MgO. Même après la rétention dans un silo pendant des temps de séjour prohibitivement longs, la conversion est rarement voire jamais complète. Boynton divulgue à ce sujet que pour obtenir des taux de conversion plus élevés, il faut procéder à une hydratation sous pression.

Ces produits hydratés contiennent donc typiquement des quantités significatives de MgO n'ayant pas réagi. Ce MgO peut alors réagir ultérieurement, par exemple pendant le transport, pendant son utilisation ou encore dans les produits dérivés, préparés au départ de ces produits hydratés, créant typiquement de nombreux problèmes à commencer par l'expansion du produit pendant l'hydratation postérieure

Dans le procédé selon l'invention, la présence de l'additif permet d'augmenter les taux de conversion pour des temps de réaction relativement courts en comparaison de procédés d'extinction conventionnels pour les composés à faible réactivité, à pression ambiante et dans des plages de températures acceptables pour une application industrielle.

Avantageusement, lesdits hydroxydes alcalins sont choisis dans le groupe constitué de l'hydroxyde de sodium, de l'hydroxyde de potassium, de l'hydroxyde de lithium et leurs mélanges. De manière préférentielle, l'hydroxyde alcalin est de l'hydroxyde de sodium.

Avantageusement, lesdits silicates alcalins ou alcalino-terreux solubles dans l'eau sont choisis dans le groupe constitué du silicate de calcium, du silicate de magnésium, du silicate de sodium, du silicate de potassium, du silicate de lithium. De manière préférentielle, le silicate est un silicate alcalin, avantageusement un silicate de sodium.

Avantageusement, lesdits aluminates solubles dans l'eau sont choisis dans le groupe constitué de l'aluminate de potassium, de l'aluminate de sodium, de l'aluminate de lithium, de l'aluminate d'ammonium et leurs mélanges.

Dans une première forme particulière de réalisation du procédé selon la présente invention, ledit additif est ajouté à ladite phase aqueuse d'extinction préalablement à ladite amenée de ladite phase aqueuse d'extinction pour former une phase aqueuse d'extinction additivée.

Dans une variante du procédé selon la présente invention, ledit additif est ajouté à ladite phase aqueuse d'extinction dans ledit équipement d'extinction ou dans ladite amenée de ladite phase aqueuse d'extinction.

Dans encore une autre variante du procédé selon l'invention, ledit additif est ajouté audit composé calco-magnésien contenant du MgO ou dans ladite amenée dudit composé calco-magnésien.

Dans un mode préférentiel du procédé selon la présente invention, ledit additif est alimenté à une teneur comprise entre 0,1 et 20 %, de préférence entre 1 et 10 % en poids par rapport au poids total de MgO.

Dans le cas particulier des dolomies vives ($xCaO.yMgO$), celles-ci sont habituellement caractérisées par leur pureté chimique et par leur réactivité.

Par pureté élevée, on entend un faible taux d'impuretés, c'est-à-dire en général moins de 5 %, avantageusement moins de 4 % en poids et de préférence moins de 3 %, voire moins de 2 % en poids des impuretés classiques qui se trouvaient au départ dans la dolomie ($SiO_2$, $Al_2O_3$, $Fe_2O_3$, $SO_3$...), mais aussi une teneur en oxydes CaO + MgO élevée. Cela suppose aussi une limitation de toutes les autres formes possibles du calcium et du magnésium comme les incuits ($CaCO_3$ $MgCO_3$) ou les composés de types silicates ou aluminates de calcium et/ou de magnésium. Les dolomies vives utilisées dans le procédé selon l'invention contiennent plus de 90 % en poids, avantageusement plus de 93 %, de préférence plus de 96 % en poids et de manière particulièrement avantageuse plus de 97 % en poids de $CaCO_3$, CaO, $Ca(OH)_2$, $Mg(OH)_2$ et MgO, et éventuellement des résidus de $MgCO_3$; CaO et MgO étant de préférence majoritaires.

Pour que le procédé objet de la présente invention soit efficace, c'est-à-dire pour que les additifs aient un rôle significatif sur le taux d'hydratation du MgO contenu dans les produits calco-magnésiens, il faut que le produit calco-magnésien initial pris avant l'hydratation selon le procédé de la présente invention soit un minimum réactif.

En effet, dans le cas où les produits calco-magnésiens à hydrater sont très peu réactifs, du fait par exemple d'une surcuisson importante du minéral de départ, comme la dolomie en particulier (cas particulier de la dolomie frittée), l'hydratation du MgO contenu dans ces composés calco-magnésiens est très difficile et les additifs revendiqués dans la présente invention, s'ils peuvent améliorer le taux d'hydratation du MgO, ne permettront certainement pas de l'augmenter de 30 %, de préférence de 100 %, de préférence de 150 % et de manière particulièrement préférentielle de 200 %.

Afin de décrire les composés calco-magnésiens pouvant être utilisés dans le procédé selon l'invention un test simple a été mis au point et est décrit ci-dessous. Dans la suite, nous l'appelons le 'test simplifié de détermination de taux de conversion' qui mesure le degré de réactivité des composés calco-magnésiens à hydrater.

Pour ce test, quatre litres d'eau déminéralisée, préalablement chauffée à 70 °C, sont introduits dans un réacteur en verre cylindrique gradué à double enveloppe d'une capacité effective de 5 $dm^3$, mesurant 15 cm de diamètre intérieur. Le réacteur est ouvert sur le dessus, ce qui permet de placer dans l'eau une pale d'agitation reliée à un moteur ainsi qu'un thermocouple. L'eau est mise sous agitation à 500-600 rpm. De l'eau à 73 °C est mise en circulation dans la double enveloppe à l'aide d'un bain thermostatique à circulation.

Lorsque l'équilibre thermique est atteint, c'est-à-dire lorsque la température de l'eau du réacteur se stabilise à 70 °C $\pm$ 1 °C, 200 g de produit calco-magnésien sont ajoutés en une seule fois dans l'eau sous agitation. L'agitation est maintenue pendant 30 minutes, durant lesquelles la température du milieu réactionnel doit rester comprise entre 70 et 80 °C. Pour les produits peu réactifs, cette température restera proche de 70 °C. Pour les produits plus réactifs, en particulier ceux contenant CaO, la température sera plus proche de 75 voire 80 °C. A l'issue des 30 minutes de réaction, l'agitation est arrêtée et la suspension est filtrée sur büchner. Un échantillon de 30 g du produit solide recueilli par filtration est alors séché à 150 °C en moins de 30 minutes à l'aide d'une thermobalance à infra rouge.

Une fois séché, le produit est soumis à une analyse thermogravimétrique et le taux de conversion de MgO est calculé d'après la méthode décrite ci-après.

De manière avantageuse, les produits calco-magnésiens présentant, après ce test simplifié de détermination de taux de conversion, un taux de conversion de MgO d'au moins 10 %, de préférence supérieur à 15 % et de manière particulièrement préférentielle supérieur à 20 % sont utilisés dans le procédé selon l'invention en présence d'au moins un additif.

Dans le cas particulier des dolomies vives de formule $xCaO.yMgO$ avec x/y compris entre 0,8 et 1,2, un autre test peut être utilisé afin de caractériser la réactivité des dolomies, appelé dans la suite 'test de réactivité'. Pour ce test décrit dans la norme ASTM C110 sous le nom de 'slaking rate', 400 g d'eau distillée préalablement chauffée à 40 °C sont introduits dans un réacteur isotherme. Cette eau est placée sous agitation à l'aide de pâles d'agitation tournant à $400 \pm 50$ rpm, puis, en une seule fois, 120 g de dolomie vive sont introduits dans cette eau. L'évolution de la température de la suspension ainsi préparée est enregistrée en fonction du temps jusqu'à atteindre une température constante. Au départ, avant introduction de la dolomie dans l'eau, la température est de 40 °C, puis après introduction de la dolomie dans l'eau, la réaction d'hydratation s'amorce et s'accompagne d'une augmentation de température, due à l'hydratation de la partie CaO de la dolomie dans un premier temps, puis à celle de la partie MgO de la dolomie dans un second temps.

Ce test de réactivité est couramment appliqué aux dolomies et habituellement, la réactivité de la dolomie est caractérisée par son $t_{70}$, qui représente le temps nécessaire pour atteindre 70 °C au départ de 40 °C dans les conditions normalisées de ce test. Dans la présente invention, un autre critère est considéré, le $t_{60}$ qui, de manière analogue, représente le temps nécessaire pour atteindre 60°C au départ de 40°C dans les conditions normalisées de ce test de réactivité. De manière avantageuse, les dolomies vives de la présente invention, possèdent un $t_{60}$ inférieur ou égal à 5 min.

Les produits calco-magnésiens décrits dans la présente invention sont généralement caractérisés après et/ou avant leur hydratation suivant le procédé objet de la présente invention par une méthode d'analyse thermique, plus particulièrement de thermogravimétrie. Cette mesure est réalisée en plaçant 50 mg à 2 g de l'échantillon hydraté dans un four muni d'une balance.

La masse de l'échantillon est alors enregistrée pendant une montée en température depuis la température ambiante jusqu'à une valeur comprise entre 900 et 1000 °C à raison de 5 à 20 °C/min sous un balayage d'air ou d'azote. L'échantillon est séché à 150 °C préalablement à cette mesure de thermogravimétrie. Cette méthode permet la quantification de différents composés présents dans l'échantillon analysé, et en particulier $Mg(OH)_2$, $Ca(OH)_2$ et $CaCO_3$. Les phases non hydratées ou non carbonatées (CaO et MgO par exemple) ne peuvent pas être identifiées et quantifiées par cette méthode de thermogravimétrie.

Avant leur hydratation selon le procédé objet de la présente invention, les produits calco-magnésiens, peuvent contenir du $Ca(OH)_2$ pouvant être i) de l'hydroxyde de calcium qui se serait formé par une réaction de CaO avec l'humidité de l'air pendant des étapes de stockage ou de transport par exemple (si les produits calco-magnésiens contiennent du calcium sous forme CaO) ou ii) de l'hydroxyde de Ca qui aurait été formé pendant une précédente étape d'hydratation du composé calco-magnésien selon un procédé différent du procédé objet de la présente invention et sans additif. La teneur en $Ca(OH)_2$ dans les produits calco-magnésiens avant l'hydratation selon le procédé de la présente invention est comprise entre 1 et 65 %, la valeur haute correspondant au cas particulier d'une dolomie semi-hydratée de formule générale $Ca(OH)_2.MgO$ (soit environ 65 % de $Ca(OH)_2$ et 35 % de MgO lorsque les impuretés sont négligées).

MgO étant moins sensible à l'humidité que CaO, les produits calco-magnésiens pris avant l'hydratation selon le procédé de la présente invention contiennent en général moins de 1,0 %, de préférence moins de 0,5 % et en particulier moins de 0,2 % de $Mg(OH)_2$.

Dans certains cas les produits calco-magnésiens peuvent contenir du $CaCO_3$ pouvant être i) du carbonate de calcium résiduel issu du minéral d'origine (dolomie par exemple) et qui n'aurait pas été décomposé pendant l'étape de calcination du minéral ou ii) du carbonate de calcium qui se serait formé par réaction de $Ca(OH)_2$ avec le $CO_2$ ambiant pendant des étapes de stockage et de transport par exemple. La teneur en $CaCO_3$ dans les produits calco-magnésiens pris avant hydratation peut être comprise entre 1 et 72 %, la valeur haute correspondant au cas particulier d'une dolomie semi-calcinée de formule générale $MgO.CaCO_3$ (soit environ 29 % de MgO et 71 % de $CaCO_3$ lorsque les impuretés sont négligées).

Après l'hydratation selon le procédé de la présente invention, les produits calco-magnésiens peuvent contenir à nouveau $CaCO_3$ puisque ce composé est insensible à l'hydratation. Ils contiennent également $Ca(OH)_2$ soit déjà présent dans le produit calco-magnésien initialement (dolomie semi-hydratée par exemple) soit issu de l'hydratation de CaO (si le composé calco-magnésien avant hydratation contient CaO). Ils contiennent aussi $Mg(OH)_2$ formé par hydratation du MgO contenu dans le produit calco-magnésien avant hydratation.

Dans le cas des produits calco-magnésiens contenant $Mg(OH)_2$, la proportion de $Mg(OH)_2$ peut être quantifiée par thermogravimétrie en considérant la perte de masse entre 200 et 450 °C, en particulier entre 220 et 420 °C, plus particulièrement entre 250 et 400 °C qui correspond au départ d'eau du fait de la déshydroxylation de $Mg(OH)_2$ ($Mg(OH)_2$ se décompose en MgO + $H_2O$).

Dans le cas des produits calco-magnésiens contenant $Ca(OH)_2$, la proportion de $Ca(OH)_2$ peut être quantifiée par thermogravimétrie en considérant la perte de masse entre 400 et 600 °C, en particulier entre 420 et 580 °C, plus particulièrement entre 450 et 560 °C qui correspond au départ d'eau du fait de la déshydroxylation de $Ca(OH)_2$ ($Ca(OH)_2$ se décompose en CaO + $H_2O$).

Dans le cas des produits calco-magnésiens contenant $CaCO_3$, la proportion de $CaCO_3$ peut être quantifiée par thermogravimétrie en considérant la perte de masse entre 600 et 900 °C, en particulier entre 620 et 850 °C, plus particulièrement entre 650 et 800 °C qui correspond au départ de $CO_2$ du fait de la décarbonatation de $CaCO_3$ ($CaCO_3$ se décompose en CaO + $CO_2$).

Au sens de la présente invention, on entend par 'taux de conversion de MgO' (noté $tC_{MgO}$ (%)) le rapport entre le nombre de moles de magnésium dans la fraction $Mg(OH)_2$ du produit hydraté final et le nombre de moles de magnésium dans le MgO initialement présent dans le produit calco-magnésien avant hydratation. Il peut être calculé selon la formule 1 ci-dessous.

$$ tc_{MgO}(\%) = \frac{\%Mg(OH)_{2\,final} \times M_{MgO}}{M_{Mg(OH)2} \times \%MgO_{initial} \times \left(1 - \dfrac{e_1 + e_2}{100}\right)} \times 100\% $$

## Formule 1

- % $Mg(OH)_{2final}$ représente la proportion massique de $Mg(OH)_2$ dans le produit hydraté tel que déterminée d'après la perte de masse correspondant à la décomposition de $Mg(OH)_2$ sur la courbe de thermogravimétrie
- % $MgO_{initial}$ est la proportion massique de MgO dans le produit à hydrater déterminée par fluorescence X
- $M_{MgO}$ est la masse molaire de MgO (g/mol) (40,3 g/mol)
- $M_{Mg(OH)2}$ est la masse molaire de $Mg(OH)_2$ (g/mol) (58,3 g/mol)
- $e_1$ est l'eau liée à $Mg(OH)_2$ dans le produit hydraté et correspond donc à la valeur absolue de la première perte de masse sur la courbe de thermogravimétrie
- $e_2$ est l'eau liée à $Ca(OH)_2$ dans le produit hydraté et correspond donc à la valeur absolue de la seconde perte de masse sur la courbe de thermogravimétrie

Avantageusement, selon la présente invention, le taux de conversion de MgO en $Mg(OH)_2$ est amélioré de 30 %, de préférence de 100 %, de préférence de 150 % et de manière particulièrement préférentielle de 200 % par rapport au taux de conversion obtenu en l'absence d'additif dans les mêmes conditions opératoires.

Le taux de conversion amélioré est calculé sous la forme d'une hausse du taux de conversion selon $((t_2 - t_1)/t_1)$ X 100 où $t_1$ représente le taux de conversion de MgO en $Mg(OH)_2$ obtenu en l'absence d'additif et $t_2$ représente le taux de conversion de MgO en $Mg(OH)_2$ obtenu en présence d'additif.

Ce taux de conversion est en outre de préférence obtenu pour des temps de réaction de moins de 5 heures, de préférence de moins de 2 heures et de manière plus préférentielle de moins de 1 heure, en particulier de moins de 30 minutes, plus particulièrement de moins de 20 minutes ; les temps les plus courts étant d'application pour les procédés continus ; dans certains cas, un temps de réaction de 15 minutes, voire 10 minutes ou moins sera suffisant.

Le temps de réaction effectif peut être plus long que le temps de séjour dans l'hydrateur. Par 'temps de réaction', on entend, au sens de la présente invention, le temps écoulé depuis la mise en contact dudit produit calco-magnésien et de ladite phase aqueuse jusqu'à obtenir le taux de conversion précité. Ce temps inclut le temps de séjour du produit dans le réacteur utilisé pour réaliser l'hydratation et peut également inclure un temps supplémentaire correspondant par exemple au stockage du produit dans un silo ou dans des containers (big bags, seaux...) après la phase d'hydratation à proprement parler qui aura eu lieu dans le réacteur. En effet, si à l'issue de la phase d'hydratation le produit contient encore des oxydes (CaO et ou MgO) non hydratés et de l'eau libre (humidité), il est susceptible de continuer à s'hydrater pendant les étapes arrivant en aval de l'hydratation (séparation, broyage, stockage en silo,...). On observe qu'avec les additifs selon l'invention, l'extinction complémentaire postérieure au séjour dans l'hydrateur est également accélérée par rapport à une situation sans additif.

Les équipements d'hydratation préférentiels pour la mise en oeuvre du procédé selon l'invention sont des équipements d'hydratation conventionnels pour la voie sèche, lequel peut-être soit un hydrateur mono-étage, c'est-à-dire constitué d'un unique réacteur (hémi)cylindrique horizontal équipé d'un axe central et de pâles, ce réacteur pouvant ou non être précédé d'un autre cylindre horizontal servant de pré-mélangeur, soit un hydrateur multi-étages composé par exemple de 3 réacteurs horizontaux successifs de diamètre croissant, dans lesquels le produit tombe au fur et à mesure de la réaction d'hydratation, ou de manière générale tout autre équipement pouvant servir à l'hydratation en voie sèche de chaux vive.

Dans une forme de réalisation préférentielle du procédé selon la présente invention, ledit composé calco-magnésien est un composé pulvérulent. L'hydrateur est alors alimenté en composé contenant du MgO pulvérulent, ayant une taille de particules comprise entre 20 $\mu$m et 10 mm, de préférence < à 5 mm, de préférence < à 2 mm.

Lesdites particules solides éteintes d'hydroxydes de calcium et magnésium sont sous la forme de particules solides contenant moins de 30 % en masse d'eau. Le rapport massique entre l'eau et le composé calco-magnésien contenant du MgO est inférieur à 1,5 dès lors que le procédé d'extinction est réalisé en voie sèche.

Dans un mode de réalisation particulière du procédé selon la présente invention, notamment en présence d'additifs de type hydroxyde alcalin, les produits issus du procédé d'hydratation selon la présente invention ont des surfaces spécifiques faibles, avantageusement comprises entre 5 et 15 m$^2$/g, de préférence inférieures à 12 m$^2$/g, de manière plus préférentielle, inférieures à 10 m$^2$/g.

Au sens de la présente invention, les termes « en voie sèche » signifie en voie sèche stricto sensu ou en voie quasi sèche.

Dans un mode d'extinction « par voie sèche », la quantité d'eau ajoutée est limitée à celle qui est nécessaire à la réaction d'extinction, augmentée de celle perdue en vapeur d'eau en raison du caractère exothermique de la réaction. Dès la sortie de l'hydrateur, le produit obtenu est pulvérulent et comprend en général à la fois moins de 2 % de CaO non hydraté résiduel et moins de 2 % d'humidité, avec un maximum de 5 % d'humidité. Notons que l'humidité résiduelle de cet hydrate sera d'au moins 0,3%, en général supérieure ou égale à 0,5 %, souvent supérieure ou égale à 1%. Par ailleurs, l'humidité résiduelle peut être temporairement supérieure à 5% en sortie d'hydrateur, notamment, lorsque le temps de réaction est prolongé au-delà du temps de séjour dans l'hydrateur. Des valeurs en sortie d'hydrateur jusqu'à 10% ou davantage (avec moins de 15%) peuvent être observées en sortie d'hydrateur. Il peut être conditionné et vendu directement, après d'éventuelles étapes de contrôles granulométriques, mais sans nécessiter aucune étape préalable de séchage et de désagglomération. Le rapport massique eau/produit calco-magnésien permettant d'atteindre ce niveau faible d'humidité est très dépendant de la réactivité dudit composé calco-magnésien. Dans le cas particulier des dolomies de formule xCaO.yMgO avec x/y compris entre 0,8 et 1,2, les rapports massiques eau/dolomie permettant la fabrication de produits contenant moins de 5 % d'humidité sont généralement compris entre 0,2 et 0,6 selon la réactivité de la dolomie. Habituellement, pour lesdites dolomies, ce rapport est compris entre 0,3 et 0,5.

Dans une variante de mode d'extinction précédent, l'hydratation peut être réalisée avec un excès d'eau plus important, selon WO 97/14650. Dans ce cas, l'hydrate obtenu contient une humidité comprise entre 5 et 30 % en masse, plus souvent entre 15% et 30% en masse, en particulier entre 20 et 30% en masse. Dans certains cas, cette humidité ne dépasse pas 25% en masse. Du fait de cette humidité, les hydroxydes nécessitent généralement une étape de séchage et de désagglomération avant stockage et transport. Ce mode d'extinction, sera appelé mode d'extinction par « voie quasi-sèche ». Il correspond, pour les dolomies telles que décrites dans le paragraphe ci-dessus, à des rapports massiques eau/dolomie généralement compris entre 0,6 et 1,2, en particulier entre 0,7 et 1,0, selon la réactivité de la dolomie.

De manière générale, moins la dolomie est réactive, moins la température durant son hydratation sera élevée. Cela conduit à une évaporation moindre de l'eau ajoutée pour la réaction d'hydratation et par conséquent à une quantité plus importante d'eau liquide, donc d'humidité dans le produit hydraté. Pour les dolomies peu réactives, la quantité d'eau ajoutée pour la réaction d'hydratation est limitée par l'humidité du produit à la sortie de l'hydrateur. En effet, pour des humidités supérieures à 25 % et de surcroit proches de 30 %, le produit s'apparente d'avantage à une pâte qu'à une poudre. De telles humidités sont problématiques pour les hydrateurs qui ne sont pas adaptés au travail des pâtes. Par conséquent, la quantité d'eau ajoutée pour l'hydratation d'une dolomie peu réactive est limitée afin de rester dans une gamme d'humidité acceptable. Or, en limitant la quantité d'eau ajoutée, l'efficacité de la réaction d'hydratation est également limitée. En effet, il est connu que plus la quantité d'eau est importante, plus l'hydratation de MgO est favorisée.

Avantageusement, le procédé selon la présente invention comporte en outre une étape de désagglomération ou broyage desdites particules solides éteintes de Ca(OH)$_2$ et Mg(OH)$_2$.

Typiquement, dans une forme de réalisation préférentielle du procédé selon l'invention, ladite phase aqueuse d'extinction présente une température avant extinction inférieure à 90°C.

D'autres formes de réalisation du procédé suivant l'invention sont indiquées dans les revendications annexées.

La présente invention se rapporte également à un composé calco-magnésien de formule xCa(OH)$_2$.aMgO.bMg(OH)$_2$ .I dans laquelle x, a et b représentent des coefficients molaires tels que a+b = y, x/(a+b)= x/y est compris entre 0.8 et 1.2 où b correspond à une proportion massique de Mg(OH)$_2$ comprise entre 5 et 50 %, et I représente des impuretés, ledit composé calco-magnésien présentant une surface spécifique mesurée par manométrie d'adsorption d'azote et calculée selon la méthode BET supérieure ou égale à 5 m$^2$/g et inférieure ou égale à 15 m$^2$/g et se présentant sous la forme de particules solides éteintes présentant au maximum 30% en masse d'humidité..

Ce composé calco-magnésien étant en particulier une dolomie, qui conjointement au fait qu'elle présente une teneur élevée en Mg(OH)$_2$, et une surface spécifique BET faible, est obtenue par hydratation par voie sèche au moyen du procédé selon l'invention.

Dans une forme de réalisation avantageuse, le composé calco-magnésien selon l'invention est de la dolomie, en particulier de la dolomie hydratée ou partiellement hydratée.

De préférence, dans le composé calco-magnésien selon la présente invention, le coefficient molaire b correspond à une proportion massique de Mg(OH)$_2$ supérieure à 7 %, de préférence supérieure à 10 %, avantageusement supérieure à 15%, de façon particulièrement préférentielle supérieure à 20%, en particulier supérieure à 30 %.

Avantageusement, dans le composé selon l'invention, le coefficient molaire b correspond à une proportion massique de Mg(OH)$_2$ inférieure à 45%, voire à 40%.

Dans encore une autre forme de réalisation avantageuse selon la présente invention, ladite surface spécifique mesurée par manométrie d'adsorption d'azote et calculée selon la méthode BET du composé calco-magnésien, de préférence obtenu par hydratation en voie sèche de dolomie, est inférieure ou égale à 12 m$^2$/g, en particulier inférieure ou égale à 10 m$^2$/g

D'autres formes de réalisation du composé selon l'invention sont mentionnées dans les revendications annexées.

D'autres caractéristiques, détails et avantages de l'invention ressortiront de la description donnée ci-après, à titre non limitatif et en faisant référence aux exemples et aux figures annexés.

La figure 1 illustre les réactivités des dolomies de l'exemple 1.
La figure 2 illustre l'effet d'additifs sur l'hydratation de la partie MgO des dolomies de l'exemple 2.
La figure 3 illustre la courbe de réactivité de la dolomie de l'exemple 3.

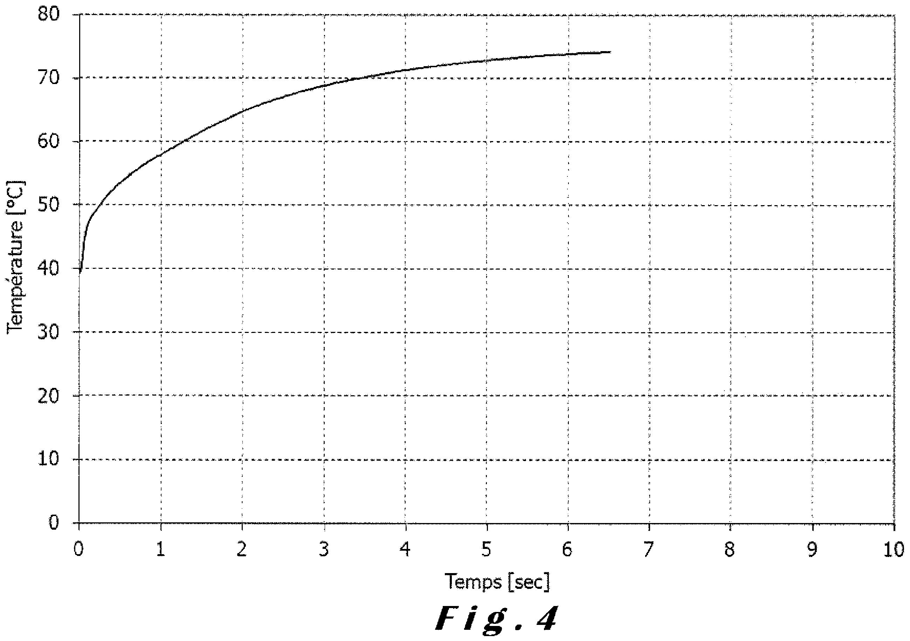

La figure 4 illustre la courbe de réactivité de la dolomie de l'exemple 7.

Le procédé selon l'invention met donc en oeuvre une hydratation en voie sèche ou quasi sèche, contrôlable rapide et simple entre autres de dolomie vive, chaux dolomitique ou chaux magnésienne ou de tout composé contenant au moins 10 % en poids de MgO, permettant, dans un équipement standard d'hydratation et par l'utilisation d'un additif dans des proportions préférentielles de 0,1 à 20 %, préférentiellement de 1 à 10 %, et de manière particulièrement avantageuse de 2 à 5 % en poids par rapport au poids total du MgO, d'atteindre un degré de conversion de MgO en Mg(OH)$_2$ significativement supérieur à celui obtenu dans les mêmes conditions mais en l'absence d'additif.
Les additifs selon la présente invention sont choisis dans le groupe constitué des hydroxydes métalliques solubles dans l'eau, notamment des hydroxydes alcalins (hydroxydes de Na, Li ou K, en particulier NaOH), des silicates métalliques solubles dans l'eau, notamment des silicates alcalins ou alcalino terreux solubles dans l'eau (en particulier les silicates alcalins de Na, Li ou K et plus particulièrement les silicates de Na), des aluminates solubles dans l'eau, des halogénures métalliques solubles dans l'eau, notamment des chlorures, des bromures, des fluorures (en particulier les chlorures métalliques), des nitrates métalliques solubles dans l'eau, des sels d'ammonium solubles dans l'eau, de l'ammoniaque, et de leurs mélanges.

Exemple 1.-

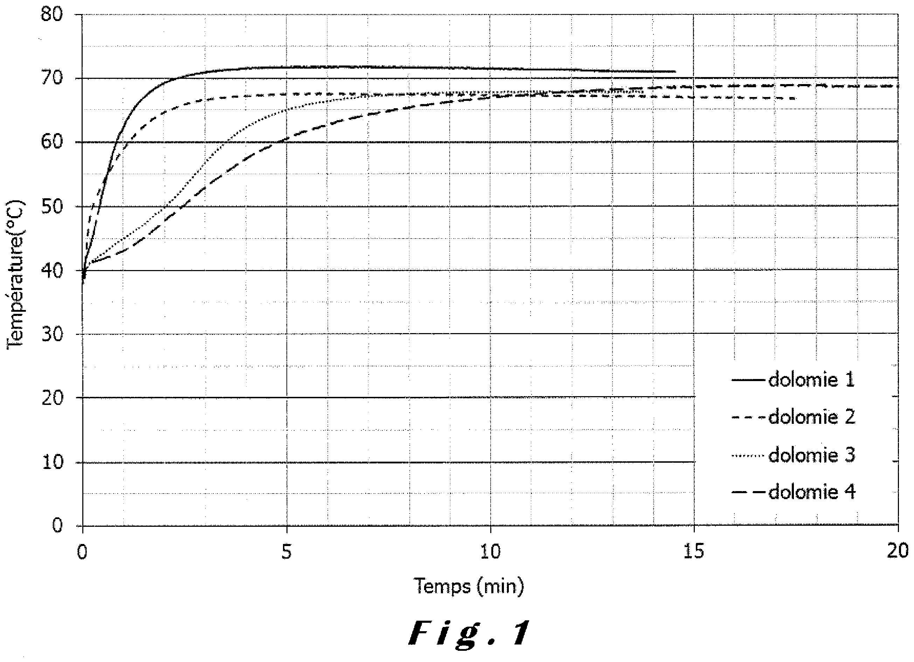

Dans cet exemple, 4 dolomies différentes ont été considérées. Ces dolomies ont des réactivités différentes, tel qu'illustré sur la Figure 1 qui présente les courbes de température enregistrées pendant le test de réactivité selon l'ASTM C110 de ces dolomies. Dans les conditions de ce test, toutes ces dolomies atteignent 60 °C au départ de 40 °C en moins de 5 minutes.

En ne tenant pas compte des impuretés (comme par exemple les traces de CaCO$_3$), la dolomie 1 contient, d'après les analyses de thermogravimétrie et de fluorescence X, un % massique de MgO de 39,5 %, un % massique de CaO de 51,9 et présente un rapport x/y (mol), soit de Ca/Mg, de 0,94. La dolomie 2 contient, d'après les analyses de thermogravimétrie et de fluorescence X, un % massique de MgO de 36,8 %, un % massique de CaO de 47,9 et présente un rapport x/y (mol), soit de Ca/Mg, de 0,93. La dolomie 3 contient, d'après les analyses de thermogravimétrie et de fluorescence X, un % massique de MgO de 37 %, un % massique de CaO de 56,9 et présente un rapport x/y (mol), soit de Ca/Mg, de 1,11. La dolomie 4 contient, d'après les analyses de thermogravimétrie et de fluorescence X, un % massique de MgO de 40,8 %, un % massique de CaO de 58,0 et présente un rapport x/y (mol), soit de Ca/Mg de 1,02.

Ces dolomies ont toutes été hydratées dans un mélangeur à socs de marque Lödige d'une capacité de 5dm$^3$, qui fait fonction d'hydrateur. Pour cette hydratation, 1 kg de dolomie est progressivement introduit dans le mélangeur en rotation à l'aide d'un doseur de poudre de paillasse. Simultanément, l'eau (eau déminéralisée) est introduite dans le mélangeur à l'aide d'une pompe péristaltique reliée à une buse de pulvérisation. Les dolomies n'ayant pas toutes la même granulométrie et étant plus ou moins fluides, le doseur de poudre ne peut pas être utilisé avec les mêmes réglages pour toutes les dolomies. De ce fait, la durée d'introduction de la totalité du kilogramme de dolomie est plus ou moins longue pour les différentes dolomies testées. Toutefois, pour chaque réglage du doseur de dolomie, la pompe d'eau a également été réglée de manière à toujours introduire la totalité de la dolomie et la totalité de l'eau simultanément pendant un même temps d'introduction, temps variant entre 10 et 20 minutes selon les dolomies. Le rapport massique eau/dolomie a été fixé pour toutes les dolomies à une valeur de 0,4.

A l'issue de cette phase d'alimentation du mélangeur, le mélange est poursuivi pendant 1h, puis le produit est sorti de l'hydrateur, séché à 150 °C et une mesure de thermogravimétrie est réalisée afin de déterminer le taux de conversion de la partie MgO de chaque dolomie dans ces conditions d'hydratation. Les échantillons étant analysés dès la fin de l'hydratation dans le mélangeur, le temps de réaction est dans ce cas assimilable au temps de séjour du produit dans le mélangeur, soit 1h (1h20 environ en incluant le temps d'introduction de la dolomie et de l'eau dans l'hydrateur).

Pour chacune des 4 dolomies considérées, l'hydratation a été réalisée sans additif dans un premier temps, puis, dans un second temps, en ajoutant 3 % d'hydroxyde de sodium (NaOH) par rapport à la masse de dolomie. Dans le cas de l'ajout de NaOH, cet additif est placé dans l'eau d'hydratation au minimum 1 heure avant le début de l'hydratation de la dolomie, de manière à garantir la dissolution complète de NaOH dans l'eau et de manière à laisser le temps à la solution de NaOH ainsi préparée de revenir à la température ambiante.

Tous les résultats sont présentés dans le Tableau 1 et indiquent un effet significatif et positif de l'utilisation de NaOH pendant la réaction d'hydratation sur le taux d'hydratation de la partie MgO de ces dolomies. L'utilisation de NaOH permet en effet d'augmenter les taux de conversion de MgO de 200% à plus de 630% par rapport au taux de conversion atteint sans additif, et cet effet très significatif est visible après seulement 1h d'hydratation.

**Tableau 1.-**

| | humidité[a] | % Mg(OH)$_2$ final | % MgO initial | e$_1$ (%) | e$_2$ (%) | tc$_{MgO}$ (%) | hausse tc$_{MgO}$ (%) |
|---|---|---|---|---|---|---|---|
| Dolomie 1 pas d'additif | 10,5 | 6,0 | 39,5 | 1,8 | 13,1 | 12,3 | --- |
| Dolomie 1 + 3 % NaOH | 7,5 | 17,0 | | 5,2 | 13,2 | 36,5 | 197 |
| Dolomie 2 pas d'additif | 14,0 | 5,6 | 36,8 | 1,7 | 11,4 | 12,0 | --- |
| Dolomie 2 + 3 % NaOH | 10,4 | 19,3 | | 5,9 | 11,0 | 43,6 | 263 |
| Dolomie 3 pas d'additif | 11,9 | 5,4 | 37,0 | 1,7 | 13,7 | 11,9 | --- |
| Dolomie 3 + 3 % NaOH | 8,2 | 18,3 | | 5,7 | 12,7 | 41,9 | 252 |
| Dolomie 4 pas d'additif | 10,2 | 2,5 | 40,8 | 0,8 | 13,5 | 4,9 | --- |
| Dolomie 4 + 3 % NaOH | 5,7 | 17,3 | | 5,3 | 12,9 | 35,8 | 631 |

[a] humidité du produit à la sortie du mélangeur après 1h d'hydratation, déterminée en mesurant la perte de masse de l'échantillon pendant un séchage à 150°C

**Exemple 2.-**

Dans cet exemple, une seule dolomie est cette fois considérée. Il s'agit de la dolomie 1 déjà utilisée dans l'exemple 1. Cette dolomie est hydratée en suivant le même mode opératoire que celui décrit dans l'exemple 1, en conservant également un rapport massique eau/dolomie de 0,4. Cette fois en revanche, l'hydratation a été réalisée pendant 30 minutes seulement à l'issue du temps d'introduction de la dolomie et de l'eau dans le mélangeur au lieu d'1 heure dans l'exemple 1. A la fin de ces 30 minutes (t = 30 minutes), le produit est sorti du mélangeur, un premier prélèvement est effectué, puis le reste du produit est placé dans un seau en plastique fermé. D'autres échantillons sont ensuite prélevés dans ce seau à t = 60, 90, 200 et 500 minutes, soit un total de 5 échantillons à chaque fois. Dans cet exemple, le temps de réaction correspond donc au temps de séjour (30 minutes) auquel est ajouté un temps de stockage dans le seau.

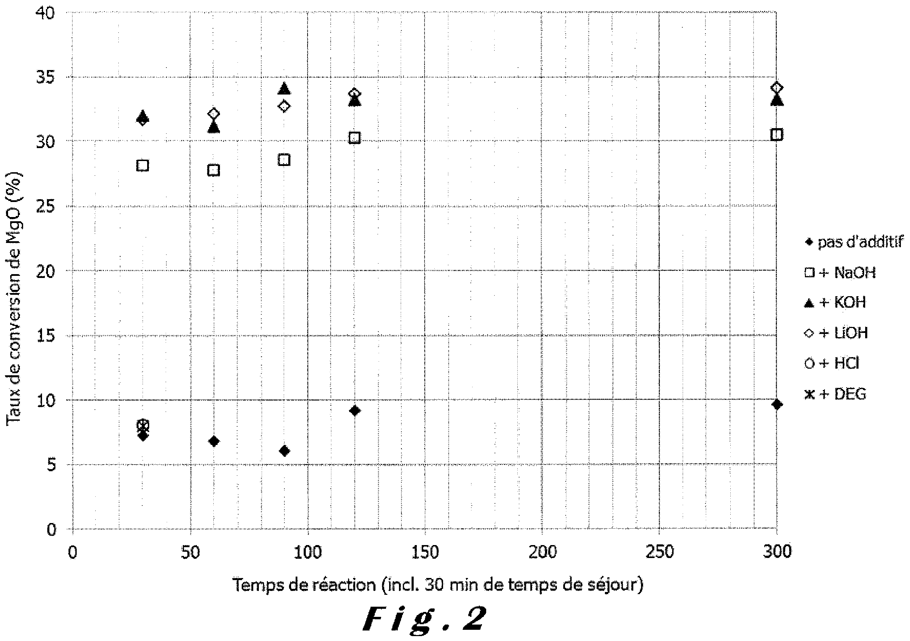

La dolomie a été hydratée sans additif, puis avec 3 % de NaOH comme dans l'exemple 1, puis avec KOH et LiOH. Pour KOH et LiOH, les masses de KOH et LiOH ont été calculées de manière à introduire dans le mélangeur où a lieu l'hydratation le même nombre de moles de OH$^-$ que celui qui est ajouté par les 3 % de NaOH. Dans le cas particulier de LiOH, l'additif utilisé est hydraté (LiOH.H$_2$O). Ces additifs ont été ajoutés à l'eau d'hydratation en suivant la même procédure que celle décrite dans l'exemple 1. Tous les résultats sont regroupés dans le Tableau 2. Ces valeurs montrent nettement l'effet positif des différents additifs testés sur le taux d'hydratation de la partie MgO de la dolomie considérée, et cet effet est visible dès 30 minutes, c'est-à-dire dès la sortie du produit de l'hydrateur (Figure 2).

**Tableau 2.-**

| | Temps (min) | humidité[a] | % Mg(OH)$_2$ final | % MgO initial | e$_1$ (%) | e$_2$ (%) | tc$_{MgO}$ (%) | hausse tc$_{MgO}$ (%)[b] |
|---|---|---|---|---|---|---|---|---|
| Pas d'additif | 30 | 11,5 | 3,6 | 39,5 | 1,1 | 13,2 | 7,4 | --- |
| | 60 | 11,5 | 3,3 | | 1,0 | 13,3 | 6,7 | --- |
| | 90 | 11,5 | 3,0 | | 0,9 | 13,2 | 6,1 | --- |
| | 200 | 11,4 | 4,5 | | 1,4 | 13,3 | 9,2 | --- |
| | 500 | 11,4 | 4,7 | | 1,4 | 13,6 | 9,7 | --- |

## EP 2 958 856 B1

(suite)

|  | Temps (min) | humidité[a] | % Mg(OH)$_2$ final | % MgO initial | e$_1$ (%) | e$_2$ (%) | tc$_{MgO}$ (%) | hausse tc$_{MgO}$ (%)[b] |
|---|---|---|---|---|---|---|---|---|
| + NaOH | 30 | 5,0 | 13,3 | 39,5 | 4,1 | 13,2 | 28,1 | 283 |
|  | 60 | 4,7 | 13,2 |  | 4,1 | 13,0 | 27,9 | 314 |
|  | 90 | 5,1 | 13,5 |  | 4,2 | 12,9 | 28,5 | 366 |
|  | 200 | 5,3 | 14,3 |  | 4,4 | 13,2 | 30,4 | 229 |
|  | 500 | 4,9 | 14,4 |  | 4,4 | 13,1 | 30,5 | 216 |
| + KOH | 30 | 8,8 | 15,1 | 39,5 | 4,7 | 13,0 | 32,1 | 337 |
|  | 60 | 9,4 | 14,7 |  | 4,5 | 13,1 | 31,2 | 363 |
|  | 90 | 9,3 | 16,0 |  | 4,9 | 13,0 | 34,1 | 458 |
|  | 200 | 9,2 | 15,7 |  | 4,8 | 12,9 | 33,4 | 262 |
|  | 500 | 9,2 | 15,6 |  | 4,8 | 12,9 | 33,2 | 243 |
| + LiOH[c] | 30 | 8,5 | 14,8 | 39,5 | 4,6 | 13,6 | 31,7 | 331 |
|  | 60 | 8,3 | 15,1 |  | 4,7 | 13,2 | 32,2 | 378 |
|  | 90 | 8,4 | 15,3 |  | 4,7 | 13,3 | 32,7 | 434 |
|  | 200 | 8,4 | 15,8 |  | 4,9 | 13,1 | 33,7 | 265 |
|  | 500 | 8,5 | 15,9 |  | 4,9 | 13,4 | 34,1 | 252 |

*a. humidité du produit à la sortie du mélangeur après 1h d'hydratation, déterminée en mesurant la perte de masse de l'échantillon pendant un séchage à 150 °C*
*b. en comparaison du produit obtenu dans les mêmes conditions sans additif*
*c. en réalité LiON.H$_2$O*

Outre un effet significatif sur le taux de conversion de MgO en Mg(OH)$_2$, les additifs utilisés dans cet exemple ont également un effet significatif sur la surface spécifique et le volume poreux des produits hydratés comme illustré par les résultats du Tableau 3.

**Tableau 3.-**

|  | Temps (min) | Surface spécifique[a] | Volume poreux[b] |
|---|---|---|---|
| Pas d'additif | 500 | 22,4 | 0,105 |
| + NaOH | 500 | 12,9 | 0,067 |
| + KOH | 500 | 8,7 | 0,057 |
| + LiOH[c] | 500 | 13,6 | 0,072 |

*a. surface spécifique BET, obtenue par manométrie à l'azote, après dégazage à 190° durant au moins 2h*
*b. volume des pores mesurant 17 à 1000 Å tel que calculé d'après la méthode BJH sur base de la mesure d'adsorption/ désorption d'azote sur échantillon dégazé c. en réalité LiOH.H$_2$O*

## Exemple 3

L'exemple 3 ci-dessous a été conduit au départ d'une dolomie vive 5 présentant un d$_{98}$ inférieur ou égale à 3 mm, contenant 39,7 % en masse de MgO d'après une analyse par spectrométrie de fluorescence X.

La dolomie 5, utilisée dans cet exemple, contient (hors impuretés, telles que par exemple CaCO$_3$), d'après les analyse de thermogravimétrie et de fluorescence X, un % massique de MgO de 39,7 %, un % massique de CaO de 55,1 et présente un rapport x/y (mol), soit de Ca/Mg, de 1,00.

Dans un premier temps, cette dolomie a été soumise au test simplifié de détermination de taux de conversion à 70 °C décrit précédemment et permettant de décrire la réactivité des matériaux à hydrater. Le taux de conversion du MgO de cette dolomie en Mg(OH)$_2$ au cours de ce test est de 22,6 % tel qu'illustré par les résultats du Tableau ci-dessous et est calculé selon la formule 1.

**Tableau 4 .-**

| %Mg(OH)$_{2final}$ | % MgO$_{intial}$ | e$_1$ (%) | e$_2$ (%) | tc$_{MgO}$ (%) |
|---|---|---|---|---|
| 10,8 | 39,7 | 3,3 | 13,5 | **22,6** |

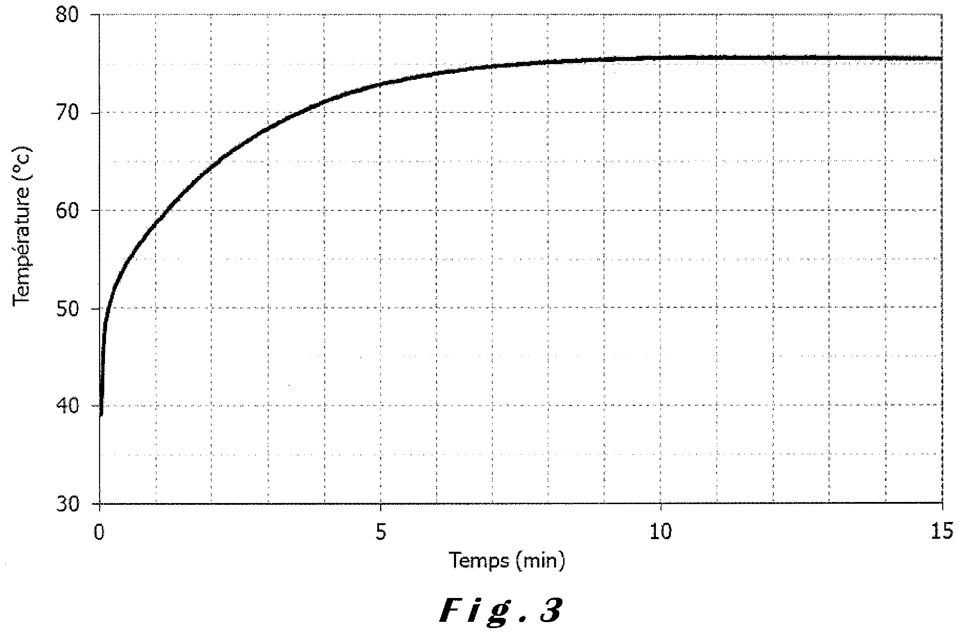

Par ailleurs, le test de réactivité tel que décrit dans le texte ci-dessus et dans l'ASTM C110, indique pour cette dolomie une réactivité relativement élevée : le t70 est de 3,5 minutes et seulement 1,2 minutes sont nécessaires pour atteindre 60 °C au départ de 40 °C comme l'illustre la courbe de réactivité de la Figure 3.

Puis, cette dolomie a été hydratée dans un hydrateur pilote de laboratoire. Cet hydrateur est un hydrateur mono-étage. Il se présente sous la forme d'un cylindre horizontal mesurant environ 80 cm de longueur sur 25 cm de diamètre. Ces proportions correspondent aux proportions des hydrateurs mono-étages industriels utilisés traditionnellement pour hydrater de la chaux vive ou de la dolomie vive à pression atmosphérique en voie sèche ou quasi-sèche. Ces dimensions sont 6 à 7 fois plus petites que les dimensions des hydrateurs industriels. Ce cylindre est muni d'une double enveloppe permettant de contrôler la température par circulation d'un fluide chaud ou froid. A l'intérieur de l'hydrateur, un axe muni de pâles sert à homogénéiser le produit pendant l'hydratation mais aussi à le pousser de l'entrée (à une extrémité) vers la sortie (à l'autre extrémité du cylindre). Lorsque le produit a parcouru toute la longueur de l'hydrateur, il en sort par simple débordement. En général, le niveau de remplissage de l'hydrateur est de l'ordre de 50 % en volume, c'est-à-dire que le lit de produit atteint environ la hauteur de l'axe.

L'hydrateur est préchauffé à 70-80 °C par circulation d'eau à 90 °C dans la double enveloppe. Ce préchauffage permet de simuler une mise en régime, acquise industriellement par le fonctionnement continu, et évite la condensation de la vapeur d'eau produite par la réaction d'hydratation de la dolomie sur les parois de l'hydrateur lorsque celles-ci sont froides. La double enveloppe est ensuite vidangée lorsque la réaction d'hydratation commence dans l'hydrateur.

Dans cet exemple, la dolomie est introduite dans l'hydrateur par une vis sans fin, préalablement calibrée afin de régler le débit de dolomie vive à 200 g/min.

La dolomie est hydratée avec un rapport massique eau/dolomie de 0,4 et en présence de 1 % d'aluminate de sodium de formule NaAlO$_2$ par rapport à la masse de dolomie. L'hydratation se fait en continu et le temps de séjour moyen de l'hydrate dans le réacteur est de l'ordre de 15-20 min. Au total, l'hydratation dans ces conditions est réalisée pendant 60 minutes. Pour respecter ces conditions, une solution est préparée préalablement à l'hydratation en mélangeant 5160 g d'eau déminéralisée et 120 g d'aluminate de sodium de formule NaAlO$_2$. Cette solution est maintenue sous agitation continue. Lorsque l'introduction de dolomie vive dans l'hydrateur est démarrée, l'injection de cette solution commence également. Cette injection dans l'hydrateur se fait au niveau de deux orifices mesurant chacun environ 5 mm de diamètre, situés sur le couvercle de l'hydrateur, proches de l'arrivée de dolomie vive, via des buses de pulvérisation. Le débit de cette solution est réglé à 88 g/min.

Les 40 premières minutes de l'hydratation correspondent à la mise en régime de l'hydrateur. Pendant les 20 minutes suivantes, des prélèvements sont régulièrement réalisés et les échantillons sont séchés dans une balance thermique à 150 °C en moins de 30 minutes. Leur humidité est notée. Ces échantillons séchés sont ensuite soumis à une mesure de thermogravimétrie permettant le calcul du taux de conversion de MgO en Mg(OH)$_2$. Dans cet exemple, les prélèvements étant effectués directement à la sortie de l'hydrateur, le temps de réaction peut être assimilé au temps de séjour dans l'hydrateur.

La même procédure d'hydratation est également réalisée mais en hydratant cette même dolomie vive dans des conditions exactement similaires mais sans additif (200 g de dolomie vive par minute et 86 g/min d'eau de ville, soit un rapport massique eau/dolomie de 0,43 comme précédemment). Cela permet de comparer les résultats obtenus avec et sans l'aluminate de sodium dans des conditions opératoires similaires. Ces résultats sont comparés dans le Tableau 5. L'additif permet d'augmenter significativement le taux d'hydratation de MgO dans les conditions de cet exemple, ce taux étant plus que doublé en présence d'1 % d'aluminate de sodium par rapport à la masse de dolomie.

**Tableau 5.-**

| | humidité[a] | % Mg(OH)$_2$ final | % MgO initial | e$_1$ (%) | e$_2$ (%) | tc$_{MgO}$ (%) | hausse tc$_{MgO}$ (%) |
|---|---|---|---|---|---|---|---|
| Eau/dolomie = 0,4 (g/g) pas d'additif | 4,6 | 3,6 | 39,7 | 1,1 | 13,8 | 7,4 | --- |

(suite)

|  | humidité[a] | % Mg(OH)$_2$ final | % MgO initial | e$_1$ (%) | e$_2$ (%) | tc$_{MgO}$ (%) | hausse tc$_{MgO}$ (%) |
|---|---|---|---|---|---|---|---|
| Eau/dolomie = 0,4 (g/g) 1 % NaAlO$_2$ | 5,1 | 7,7 | 39,7 | 2,4 | 13,7 | 16,0 | 115 |
| *a. humidité du produit à la sortie du mélangeur après 1h d'hydratation, déterminée en mesurant la perte de masse de l'échantillon pendant un séchage à 150 °C* | | | | | | | |

### Exemple 4.-

L'exemple est très similaire à l'exemple 3 en ce que la même dolomie est utilisée et hydratée dans le même hydrateur. Cette fois néanmoins, la dolomie vive, toujours introduite dans l'hydrateur à raison de 200 g/min, est hydratée avec un rapport eau/dolomie en masse de 0,8. Dans un premier temps, la dolomie est hydratée avec de l'eau déminéralisée, sans ajout d'additif (160 g d'eau / min). Puis, l'eau est remplacée par une solution d'aluminate de sodium de formule NaAlO$_2$ préalablement préparée en mélangeant 9600 g d'eau de ville et 600 g d'aluminate de sodium NaAlO$_2$. Pendant les 60 minutes d'hydratation (dont les 40 premières de mise en régime), cette solution est injectée dans i'hydrateur avec un débit de 170 g/min. Les résultats obtenus dans ces nouvelles conditions avec et sans l'additif sont comparées dans le tableau 6. Dans cet exemple comme dans l'exemple 3 le temps de réaction peut être assimilé au temps de séjour dans l'hydrateur puisque les échantillons sont caractérisés dès leur sortie de l'hydrateur.

L'additif permet d'augmenter très significativement le taux d'hydratation de MgO dans les conditions de cet exemple, ce taux étant plus que triplé en présence de 5 % d'aluminate de sodium par rapport à la masse de dolomie. La valeur de 28,5 % atteinte par le taux de conversion de MgO lors de la présence de 5 % d'aluminate de sodium est un taux de conversion élevé en comparaison des taux de conversion habituellement obtenus sans additif dans des conditions industrielles d'hydratation de dolomie en voie sèche, généralement considérés comme ne pouvant pas dépasser 25 %.

**Tableau 6.-**

|  | humidité[a] | % Mg(OH)$_2$ final | % MgO initial | e$_1$ (%) | e$_2$ (%) | tc$_{MgO}$ (%) | hausse tc$_{MgO}$ (%) |
|---|---|---|---|---|---|---|---|
| Eau/dolomie = 0,8 (g/g) pas d'additif | 20,1 | 4,3 | 39,7 | 1,3 | 14,0 | 8,8 | |
| Eau/dolomie = 0,8 (g/g) 5 % NaAlO$_2$ | 22,0 | 13,5 | 39,7 | 4,2 | 13,4 | 28,5 | 225 |
| *a. humidité du produit à la sortie du mélangeur après 1h d'hydratation, déterminée en mesurant la perte de masse de l'échantillon pendant un séchage à 150 °C* | | | | | | | |

### Exemple 5.-

Dans cet exemple, la dolomie 2 décrite dans l'exemple 1 a été hydratée dans l'hydrateur pilote de laboratoire déjà utilisé dans les exemples 3 et 4 ci-dessus. Cette fois, le débit de dolomie est fixé à 150 g/min mais tous les autres réglages sont gardés constants par rapport au protocole décrit dans l'exemple 3 (pré-chauffage, taux de remplissage...).

Cette dolomie est dans un premier temps hydratée avec de l'eau déminéralisée préalablement chauffée à 70 °C et introduite dans l'hydrateur à un débit de 55 g/min. Puis, cette eau est remplacée par une solution de soude (NaOH), d'une concentration de 10 % en masse, également préchauffée à 70 °C et dont le débit est réglé à 85 g/min. Cela correspond à ajouter 5,7 % de NaOH par rapport à la masse de dolomie.

Comme précédemment dans l'exemple 3, le temps de séjour moyen dans l'hydrateur est de l'ordre de 20-30 minutes. Dès sa sortie de l'hydrateur, le produit hydraté est caractérisé (donc à nouveau le temps de réaction est équivalent ici au temps de séjour). Les résultats sont repris dans le Tableau 7. Dans ce cas, l'effet de l'utilisation de l'hydroxyde pendant la réaction d'hydratation de la dolomie est très fortement marqué.

**Tableau 7.-**

| | humidité[a] | % $Mg(OH)_2$ final | % MgO initial | $e_1$ (%) | $e_2$ (%) | $tc_{MgO}$ (%) |
|---|---|---|---|---|---|---|
| pas d'additif | 2,0 | < 0,5 | 36,8 | 0 | 10,8 | < 1 |
| + 5,7 % NaOH | 2,9 | 21,7 | | 6,7 | 11,3 | 49,7 |
| *a. humidité du produit à la sortie du mélangeur après 1h d'hydratation, déterminée en mesurant la perte de masse de l'échantillon pendant un séchage à 150 °C* | | | | | | |

Le produit obtenu en présence de soude et présentant le taux de conversion de l'ordre de 50 % a une surface spécifique BET de 11,0 $m^2$/g.

## Exemple 6

Cette fois, c'est la dolomie 3 décrite dans l'exemple 1 qui a été hydratée dans l'hydrateur pilote déjà utilisé dans les exemples 3 à 5. Elle a été alimentée dans l'hydrateur avec un débit de 150 g/min.
Cette dolomie est dans un premier temps hydratée avec de l'eau déminéralisée préalablement chauffée à 70 °C et introduite dans l'hydrateur à un débit de 59 g/min. Puis, cette eau est remplacée par une solution de soude (NaOH), d'une concentration de 7,5 % en masse, également préchauffée à 70 °C et dont le débit est réglé à 71 g/min. Cela correspond à ajouter 3,5 % de NaOH par rapport à la masse de dolomie.
Comme précédemment dans l'exemple 5, le temps de séjour moyen dans l'hydrateur est de l'ordre de 20-30 minutes. A la sortie de l'hydrateur, les produits sont placés dans des seaux pour leur stockage en laboratoire. Une première série d'échantillons produits avec et sans soude a été prélevée directement après la sortie de l'hydrateur (temps de réaction = temps de séjour dans l'hydrateur). Une deuxième série d'échantillons produits avec et sans soude a ensuite été prélevée dans les seaux 1 heure après la sortie de l'hydrateur (temps de réaction = temps de séjour + 1h). Les résultats sont repris dans le Tableau 8. Si la soude permet déjà de doubler le taux de conversion de MgO en $Mg(OH)_2$ endéans la durée passée par le produit dans l'hydrateur (temps de réaction = temps de séjour), son effet est largement plus important lorsque les produits sont stockés pendant 1 heure avant d'être caractérisés (temps de réaction = temps de séjour + 1h). En effet, en présence de soude, un taux de conversion de quasiment 76 % a pu être atteint après seulement 1 heure de stockage du produit sorti de l'hydrateur. En revanche, le produit obtenu sans additif ne réagit pas pendant cette heure de stockage. Le produit obtenu en présence de soude et présentant le taux de conversion de l'ordre de 76 % a une surface spécifique BET de 9,2 $m^2$/g.

**Tableau 8.-**

| | Temps de réaction | humidité[a] | % $Mg(OH)_2$ final | % MgO initial | $e_1$ (%) | $e_2$ (%) | $tc_{MgO}$ (%) |
|---|---|---|---|---|---|---|---|
| pas d'additif | Temps de séjour | 1,6 | 1,9 | 37,0 | 0,6 | 13,2 | 4,1 |
| | Temps de séjour +1h | 1,2 | 1,8 | | 0,6 | 13,6 | 3,9 |
| + 3,5 % NaOH | Temps de séjour | 11,0 | 4,2 | | 1,3 | 13,5 | 9,2 |
| | Temps de séjour +1h | 1,5 | 31,3 | | 9,7 | 13,1 | 75,7 |
| *a. humidité du produit à la sortie du mélangeur après 1h d'hydratation, déterminée en mesurant la perte de masse de l'échantillon pendant un séchage à 150°C* | | | | | | | |

## Exemple 7.-

Dans cet exemple, une dolomie 6 est considérée. Cette fois, elle est hydratée dans un mélangeur planétaire epicycloïdal de marque Hobart et d'une capacité de 5dm³.
La dolomie 6, utilisée dans cet exemple, contient (hors impuretés, telles que par exemple $CaCO_3$), d'après les analyses de thermogravimétrie et de fluorescence X, un % massique de MgO de 40,9 %, un % massique de CaO de 54,1 et présente un rapport x/y (mol), soit de Ca/Mg de 0,95.
La principale différence entre ce mélangeur et le mélangeur à socs des exemples 1 et 2 et que ce mélangeur est nettement moins fermé, conduisant ainsi à la libération de l'énergie dégagée par la réaction d'hydratation et de ce fait à une température plus basse pendant l'hydratation que celle mesurée pour la même dolomie et le même rapport eau/dolomie dans le mélangeur à socs plus fermé. L'introduction de l'eau et de la dolomie se fait en revanche exactement de la même manière que dans les exemples 1 et 2.

Cette fois, ce sont 800 g de dolomie et 320 g d'eau déminéralisée (eau/dolomie = 0,4) qui sont alimentés progressivement dans le mélangeur pendant une durée d'environ 20 minutes. A la fin de cette phase d'alimentation, le mélange est maintenu sous agitation pour une hydratation de 60 minutes. Le produit est ensuite sorti du mélangeur, séché à 150 °C et analysé afin de déterminer le taux de conversion de MgO en $Mg(OH)_2$ dans ces conditions (temps de réaction = temps de séjour).

Dans cet exemple, l'hydratation a été réalisée dans un premier temps avec de l'eau sans additif pour servir de référence, puis avec 3 % de silicate de sodium par rapport à la masse de dolomie dans un second temps. Le silicate de sodium utilisé se présente sous la forme de wasserglass, c'est-à-dire sous la forme d'un silicate de sodium de rapport molaire $SiO_2/Na_2O$ = 3,5 en solution dans de l'eau à une concentration de 37 %.

Les résultats sont présentés dans le Tableau 9. Ils montrent un taux d'hydratation de la dolomie 6 sans additif faible en comparaison des taux obtenus sans additifs pour les dolomies 1 à 6 dans les exemples précédents, probablement lié à la température d'hydratation plus basse comme expliqué ci-dessus. En revanche, l'hydratation avec le silicate de sodium permet d'atteindre dans ces mêmes conditions, un taux d'hydratation du MgO nettement plus élevé.

**Tableau 9.-**

| | humidité 150 °C | % $Mg(OH)_2$ final | % MgO initial | $e_1$ (%) | $e_2$ (%) | $tc_{MgO}$ (%) | hausse $tc_{MgO}$ (%) |
|---|---|---|---|---|---|---|---|
| pas d'additif | 2,7 | 1,5 | 40,9 | 0,4 | 13,8 | 2,9 | --- |
| 3 % silicate de Na | 5,0 | 4,8 | | 1,5 | 12,4 | 9,4 | 224 |

**Exemple comparatif 1.-**

Cet exemple comparatif est similaire à l'exemple 2, mais cette fois, ce n'est pas un hydroxyde alcalin qui a été utilisé comme additif pendant l'hydratation de la dolomie 1, mais de l'acide chlorhydrique. Comme dans l'exemple 2, le rapport massique eau/dolomie a été conservé à 0,4 et la quantité d'additif à 3 % de la masse de dolomie. Pour cela, à 1 kg de dolomie a été ajoutée progressivement, selon le protocole de l'exemple 2, une solution préparée avec 81 g d'acide chlorhydrique 37 % en masse et 349 g d'eau déminéralisée. A l'issue des 30 minutes de temps de séjour dans le mélangeur où a lieu l'hydratation, le produit a été séché et caractérisé (temps de réaction = temps de séjour). Les résultats de ce test sont présentés dans le Tableau 10 et montrent un effet négligeable de l'acide chlorhydrique sur le taux d'hydratation de la partie MgO de cette dolomie (Figure 2).

**Exemple comparatif 2.-**

Ce deuxième exemple comparatif est exactement similaire à l'exemple comparatif 1, mais cette fois, l'acide chlorhydrique a été remplacé par du di-éthylène glycol (DEG) se trouvant sous forme liquide (1 kg de dolomie + 400 g d'eau déminéralisée préalablement mélangés avec 30 g de DEG liquide). Les résultats se trouvent dans le Tableau 10 et indiquent à nouveau un effet négligeable du DEG sur le taux de conversion du MgO de cette dolomie (Figure 2).

**Tableau 10.-**

| | % $Mg(OH)_2$ final | % MgO initial | $e_1$ (%) | $e_2$ (%) | $tc_{MgO}$ (%) |
|---|---|---|---|---|---|
| pas d'additif | 3,6 | | 1,1 | 13,2 | 7,4 |
| 3 % HCl | 3,9 | 39,5 | 1,2 | 12,9 | 7,9 |
| 3 % DEG | 4,0 | | 1,2 | 11,6 | 8,0 |

Il est bien entendu que la présente invention n'est en aucune façon limitée aux formes de réalisations décrites ci-dessus et que bien des modifications peuvent y être apportées sans sortir du cadre des revendications annexées.

**Revendications**

1. Procédé d'extinction en voie sèche d'oxydes de calcium et magnésium de composés calco-magnésiens, contenant de préférence au moins 10% en poids de MgO par rapport au poids total dudit composé calco-magnésien, comprenant les étapes de :

- une alimentation en composé calco-magnésien contenant du MgO dans un équipement d'extinction,
- une alimentation en phase aqueuse d'extinction dans ledit équipement d'extinction, et
- une extinction desdits oxydes de calcium et magnésium dudit composé calco-magnésien amenés dans ledit équipement d'extinction, par ladite phase aqueuse d'extinction, avec formation de particules solides éteintes d'hydroxydes de calcium et magnésium

**caractérisé en ce que** le rapport massique entre l'eau et le composé calco-magnésien contenant du MgO est inférieur à 1,5 et **en ce que** ladite extinction est réalisée en présence d'un additif choisi dans le groupe constitué des hydroxydes métalliques solubles dans l'eau, des silicates métalliques solubles dans l'eau, des aluminates solubles dans l'eau, et de leurs mélanges.

2. Procédé d'extinction selon la revendication 1, dans lequel lesdits oxydes de calcium et magnésium de composé calco-magnésien, présentent une teneur en oxyde de magnésium inférieure à 50% en poids par rapport au poids dudit composé calco-magnésien, et présentent de préférence un rapport molaire calcium/magnésium compris entre 0,8 et 1,2.

3. Procédé d'extinction selon la revendication 1 ou la revendication 2, dans lequel ledit composé calco-magnésien est choisi dans le groupe constitué de la dolomie vive, semi calcinée ou semi hydratée, des composés mixtes calco-magnésiens, en particulier des oxydes mixtes de calcium et de magnésium, dont la teneur en MgO est substantielle, à savoir supérieure à 10% en poids par rapport au poids total de l'oxyde mixte, et leurs mélanges.

4. Procédé d'extinction selon l'une quelconque des revendications 1 à 3, dans lequel lesdits hydroxydes métalliques solubles dans l'eau sont choisis dans le groupe constitué des hydroxydes alcalins, en particulier les hydroxydes de sodium, de potassium ou de lithium et de leurs mélanges.

5. Procédé d'extinction selon l'une quelconque des revendications 1 à 3, dans lequel lesdits silicates métalliques solubles dans l'eau sont choisis dans le groupe constitué des silicates alcalins, en particulier les silicates de sodium et de lithium, des silicates alcalino-terreux, en particulier les silicates de calcium et de magnésium, et de leurs mélanges.

6. Procédé d'extinction selon l'une quelconque des revendications 1 à 3, dans lequel lesdits aluminates solubles dans l'eau sont choisis dans le groupe constitué de l'aluminate de potassium, de l'aluminate de sodium, de l'aluminate de lithium, de l'aluminate d'ammonium et leurs mélanges.

7. Procédé d'extinction selon l'une quelconque des revendications 1 à 3, dans lequel lesdits halogénures métalliques solubles dans l'eau sont choisis dans le groupe constitué des chlorures métalliques, des bromures métalliques, des fluorures métalliques et de leurs mélanges, en particulier le chlorure métallique

8. Procédé d'extinction selon l'une quelconque des revendications 1 à 3, dans lequel lesdits nitrates métalliques et lesdits halogénures métalliques comportent au moins un atome d'un métal choisi dans le groupe constitué de l'aluminium, du calcium et du magnésium.

9. Procédé d'extinction selon l'une quelconque des revendications 1 à 3, dans lequel lesdits nitrates métalliques et lesdits halogénures métalliques, comportent au moins un atome d'un métal choisi dans le groupe constitué de l'aluminium et du magnésium.

10. Procédé d'extinction selon l'une quelconque des revendications 1 à 9, dans lequel ledit additif est ajouté à ladite phase aqueuse d'extinction préalablement à ladite amenée de ladite phase aqueuse d'extinction pour former une phase aqueuse d'extinction additivée.

11. Procédé d'extinction selon l'une quelconque des revendications 1 à 10, dans lequel ledit additif est ajouté à ladite phase aqueuse d'extinction dans ledit équipement d'extinction ou dans ladite amenée de ladite phase aqueuse d'extinction.

12. Procédé d'extinction selon l'une quelconque des revendications 1 à 11, dans lequel ledit additif est ajouté audit composé contenant du MgO ou dans ladite amenée dudit composé calco-magnésien.

13. Procédé d'extinction selon l'une quelconque des revendications 1 à 12, dans lequel ledit additif est alimenté à une teneur comprise entre 0,1 et 20 %, de préférence entre 1 et 10 % en poids par rapport au poids total de MgO.

**14.** Procédé d'extinction selon l'une quelconque des revendications 1 à 13, dans lequel ledit composé calco-magnésien présente un taux de conversion de MgO en $Mg(OH)_2$ d'au moins 10 %, de préférence supérieur à 15 % et de manière particulièrement préférentielle supérieur à 20 %, selon un test simplifié de détermination de taux de conversion.

**15.** Procédé d'extinction selon l'une quelconque des revendications 1 à 14, dans lequel ledit équipement d'extinction est un hydrateur conventionnel en voie sèche.

**16.** Procédé d'extinction selon l'une quelconque des revendications 1 à 13, dans lequel le taux de conversion de MgO en $Mg(OH)_2$ est amélioré de 30 %, de préférence de 100 %, de préférence de 150 % et de manière particulièrement préférentielle de 200 % par rapport au taux de conversion obtenu en l'absence d'additif.

**17.** Procédé d'extinction selon la revendication 16, dans lequel ledit temps de réaction est de moins de cinq heures, de préférence de moins de deux heures, plus préférentiellement de moins de 1 heure, en particulier de moins de 30 minutes et plus particulièrement de moins de 20 minutes.

**18.** Procédé d'extinction selon l'une quelconque des revendications 1 à 17, dans lequel ledit composé calco-magnésien est un composé pulvérulent.

**19.** Procédé d'extinction selon l'une quelconque des revendications 1 à 18, ladite extinction est une extinction en voie sèche ou en voie quasi sèche.

**20.** Procédé d'extinction selon la revendication 19, comprenant en outre une étape de désagglomération ou broyage desdites particules solides éteintes

**21.** Procédé d'extinction selon l'une quelconque des revendications 1 à 20, dans lequel ladite phase aqueuse d'extinction présente une température avant extinction inférieure à 90°C.

**22.** Composé calco-magnésien de formule $xCa(OH)_2.aMgO.bMg(OH)_2$ .I dans laquelle x, a et b représentent des coefficients molaires tels que a+b = y, x/(a+b)= x/y est compris entre 0.8 et 1.2 où b correspond à une proportion massique de $Mg(OH)_2$ comprise entre 5 et 50 %, et I représentant des impuretés, ledit composé calco-magnésien présentant une surface spécifique mesurée par manométrie d'adsorption d'azote et calculée selon la méthode BET supérieure ou égale à 5 $m^2$/g et inférieure ou égale à 15 $m^2$/g et se présentant sous la forme de particules solides éteintes d'hydroxydes de calcium et de magnésium présentant au maximum 30% en masse d'humidité.

**23.** Composé calco-magnésien selon la revendication 22, où le composé calco-magnésien est de la dolomie, en particulier de la dolomie hydratée ou partiellement hydratée.

**24.** Composé calco-magnésien selon la revendication 22, où le coefficient molaire b correspond à une proportion massique de $Mg(OH)_2$ supérieure à 7 %, de préférence supérieure à 10%.

**Patentansprüche**

**1.** Verfahren zum Trockenlöschen von Kalzium- und Magnesiumoxiden aus calcomagnesiahaltigen Verbindungen, vorzugsweise mindestens 10 Gew.-% an MgO im Verhältnis zum Gesamtgewicht der calcomagnesiahaltigen Verbindung enthaltend, die folgenden Schritte umfassend:

- eine Versorgung in einer Löschausrüstung mit calcomagnesiahaltiger Verbindung, die MgO enthält;
- eine Versorgung in der Löschausrüstung mit einer wässrigen Phase zum Löschen, und
- ein Löschen des Kalzium- und des Magnesiumoxids der calcomagnesiahaltigen Verbindung, die in die Löschausrüstung eingebracht wird, durch die wässrige Phase , mit Bildung von gelöschten Feststoffpartikeln aus Kalzium- und Magnesiumhydroxid

**dadurch gekennzeichnet, dass** das Masseverhältnis zwischen dem Wasser und der MgO enhaltenden calcomagnesiahaltigen Verbindung kleiner als 1,5 ist und dadurch, dass das Löschen im Beisein eines Additivs realisiert wird, das aus der Gruppe gebildet aus in Wasser löslichen Metallhydroxiden, in Wasser löslichen Metallsilikaten, in Wasser löslichen Aluminaten und deren Gemischen ausgewählt wird.

2. Verfahren zum Löschen nach Anspruch 1, wobei das Kalzium-und das Magnesiumoxid der calcomagnesiahaltigen Verbindung einen Gehalt an Magnesiumoxid von weniger als 50 Gew.-% im Verhältnis zum Gewicht der calcomagnesiahaltigen Verbindung aufweisen, und vorzugsweise ein Molverhältnis Kalzium/Magnesium von zwischen 0,8 und 1,2 aufweisen.

3. Verfahren zum Löschen nach Anspruch 1 oder Anspruch 2, wobei die calcomagnesiahaltige Verbindung aus der Gruppe gebildet aus - dolomitischem Kalk, halbgebranntem oder halbhydriertem Dolomit, calcomagnesiahaltigen Mischverbindungen, insbesondere Mischoxide von Kalzium und Magnesium, deren Gehalt an MgO erheblich, nämlich mehr als 10 Gew.-% im Verhältnis zum Gesamtgewicht des Mischoxids, ist, und deren Gemischen ausgewählt wird.

4. Verfahren zum Löschen nach einem der Ansprüche 1 bis 3, wobei die in Wasser löslichen Metallhydroxide aus der Gruppe gebildet aus Alkalihydroxiden, insbesondere Natrium-, Kalium- oder Lithiumhydroxiden und deren Gemischen ausgewählt werden.

5. Verfahren zum Löschen nach einem der Ansprüche 1 bis 3, wobei die in Wasser löslichen Metallsilikate aus der Gruppe gebildet aus Alkalisilikaten, insbesondere Natrium- und Lithiumsilikaten, den Erdalkalisilikaten, insbesondere Kalzium- und Magnesiumsilikaten und deren Gemischen ausgewählt werden.

6. Verfahren zum Löschen nach einem der Ansprüche 1 bis 3, wobei die in Wasser löslichen Aluminate aus der Gruppe gebildet aus Kaliumaluminat, Natriumaluminat, Lithiumaluminat, Ammoniumaluminat und deren Gemischen ausgewählt werden.

7. Verfahren zum Löschen nach einem der Ansprüche 1 bis 3, wobei die in Wasser löslichen Metallhalogenide aus der Gruppe gebildet aus Metallchloriden, Metallbromiden, Metallfluoriden und deren Gemischen, insbesondere Metallchlorid, ausgewählt werden.

8. Verfahren zum Löschen nach einem der Ansprüche 1 bis 3, wobei die Metallnitrate und die Metallhalogenide mindestens ein Ion eines Metalls beinhalten, das aus der Gruppe gebildet aus Aluminium, Kalzium und Magnesium ausgewählt wird.

9. Verfahren zum Löschen nach einem der Ansprüche 1 bis 3, wobei die Metallnitrate und die Metallhalogenide mindestens ein Ion eines Metalls beinhalten, das aus der Gruppe gebildet aus Aluminium und Magnesium ausgewählt wird.

10. Verfahren zum Löschen nach einem der Ansprüche 1 bis 9, wobei das Additiv zur wässrigen Phase vor der Zugabe dieser wässrigen Phase zum Löschprozess hinzugefügt wird, um eine additiv-haltige, wässrige Phase zum Löschen zu erhalten.

11. Verfahren zum Löschen nach einem der Ansprüche 1 bis 10, wobei das Additiv zur wässrigen Phase in der Löschausrüstung oder während der Zuführung der wässrigen Phase zum Löschprozess hinzugefügt wird.

12. Verfahren zum Löschen nach einem der Ansprüche 1 bis 11, wobei das Additiv zu der MgO enthaltenden Verbindung oder in der Zufuhr der calcomagnesiahaltigen Verbindung zum Löschprozess hinzugefügt wird.

13. Verfahren zum Löschen nach einem der Ansprüche 1 bis 12, wobei das Additiv in einem Gehalt zugeführt wird, der zwischen 0,1 und 20 %, vorzugsweise zwischen 1 und 10 Gew.-% im Verhältnis zum Gesamtgewicht von des zugeführten MgO liegt.

14. Verfahren zum Löschen nach einem der Ansprüche 1 bis 13, wobei die calcomagnesiahaltige Verbindung eine Umwandlungsrate von MgO in $Mg(OH)_2$ von mindetsens 10 %, vorzugsweise mehr als 15 %, und besonders bevorzugt mehr als 20 % gemäß einem vereinfachten Test zum Bestimmen der Umwandlungsrate aufweist.

15. Verfahren zum Löschen nach einem der Ansprüche 1 bis 14, wobei die Löschausrüstung ein konventioneller Trockenhydrator ist.

**16.** Verfahren zum Löschen nach einem der Ansprüche 1 bis 13, wobei die Umwandlungsrate von MgO in Mg(OH)$_2$ um 30 %, vorzugsweise um 100%, vorzugsweise um 150 % und besonders bevorzugt um 200 % im Verhältnis zur in Abwesenheit eines Additivs erhaltenen Umwandlungsrate verbessert wird.

**17.** Verfahren zum Löschen nach Anspruch 16, wobei die Reaktionszeit weniger als fünf Stunden, vorzugsweise weniger als zwei Stunden, bevorzugt weniger als 1 Stunde, insbesondere weniger als 30 Minuten und ganz besonders weniger als 20 Minuten beträgt.

**18.** Verfahren zum Löschen nach einem der Ansprüche 1 bis 17, wobei die calcomagnesiahaltige Verbindung in Pulverform vorliegt.

**19.** Verfahren zum Löschen nach einem der Ansprüche 1 bis 18, wobei die Löschung eine Trockenlöschung oder Quasi-Trockenlöschung ist.

**20.** Verfahren zum Löschen nach Anspruch 19, umfassend ferner einen Schritt zur Deagglomierung oder zum Mahlen der gelöschten Feststoffpartikel.

**21.** Verfahren zum Löschen nach einem der Ansprüche 1 bis 20, wobei die wässrige Phase zum Löschen eine Temperatur vor dem Löschen von unter 90 °C aufweist.

**22.** Calcomagnesiahaltige Verbindung der Formel xCa(OH)$_2$.aMgO.bMg(OH)$_2$·I, bei der x, a und b Molkoeffizienten repräsentieren, sodass a+b = y ist und das Verhältnis x/(a+b) = x/y zwischen 0,8 und 1,2 beträgt. Wobei b einer Massenproportion von Mg(OH)$_2$ entspricht, die zwischen 5 und 50 % liegt, und I Verunreinigungen repräsentiert. Wobei die calcomagnesiahaltige Verbindung eine spezifische Oberfläche, die durch Stickstoffadsorption-Manometrie gemessen wird, und gemäß dem BET-Verfahren berechnet wird, von größer oder gleich 5 m$^2$/g und kleiner oder gleich 15 m$^2$/g aufweist, und sich in Form von gelöschten Feststoffpartikeln von Kalzium- und Magnesiumhydroxiden vorfindet, die höchstens 30 Massen-% an Feuchtigkeit aufweisen.

**23.** Calcomagnesiahaltige Verbindung nach Anspruch 22, wo die calcomagnesiahaltige Verbindung Dolomitkalk, insbesondere hydratisierter oder teilweise hydratisierter Dolomitkalk ist.

**24.** Calcomagnesiahaltige Verbindung nach Anspruch 22, wobei der Molkoeffizient b einem Massenverhältnis an Mg(OH)$_2$ von größer als 7 %, vorzugsweise größer als 10% entspricht.

**Claims**

**1.** A method for the dry slaking of calcium and magnesium oxides from calcium-magnesium compounds, preferably containing at least 10% by weight of MgO based on the total weight of said calcium-magnesium compound, including the steps of:

    - supplying calcium-magnesium compound containing MgO in an slaking equipment,
    - supplying a slaking aqueous phase to said slaking equipment, and
    - slaking said calcium and magnesium oxides from said calcium-magnesium compound supplied into said slaking equipment, by said slaking aqueous phase, with formation of slaked solid particles of calcium and magnesium hydroxides

**characterized in that** the mass ratio between water and the calcium-magnesium compound containing MgO is less than 1.5 and **in that** said slaking is carried out in the presence of an additive selected from the group consisting of water-soluble metal hydroxides, water-soluble metal silicates, water-soluble aluminates, and mixtures thereof.

**2.** The slaking method according to claim 1, wherein said calcium and magnesium oxides from calcium-magnesium compound, have a magnesium oxide content less than 50% by weight, based on the weight of said calcium-magnesium compound, and have preferably a calcium/magnesium molar ratio between 0.8 and 1.2.

**3.** The method of slaking according to claim 1 or claim 2, wherein said calcium-magnesium compound is selected from the group consisting of quick, semi-calcined or semi-hydrated dolomite, mixed calcium-magnesium compounds, in particular mixed calcium and magnesium oxides, with a substantial MgO content, i.e. higher than 10% in weight based on the total weight of the mixed oxide, and mixtures thereof.

4. The method of slaking according to any of claims 1 to 3, wherein said water-soluble metal hydroxides are selected from the group consisting of alkali hydroxides, in particular sodium, potassium or lithium hydroxides and mixtures thereof.

5. The method of slaking according to any of claims 1 to 3, wherein said water-soluble metal silicates are selected from the group consisting of alkali silicates, in particular sodium and lithium silicates, alkaline earth silicates, in particular calcium and magnesium silicates, and mixtures thereof.

6. The method of slaking according to any of claims 1 to 3, wherein said water-soluble aluminates are selected from the group consisting of potassium aluminate, sodium aluminate, lithium aluminate, ammonium aluminate and mixtures thereof.

7. The method of slaking according to any of claims 1 to 3, wherein said water-soluble metal halides are selected from the group consisting of metal chlorides, metal bromides, metal fluorides and mixtures thereof, in particularly metal chloride.

8. The method of slaking according to any of claims 1 to 3, wherein said metal nitrates and said metal halides include at least one atom of a metal selected from the group consisting of aluminum, calcium and magnesium.

9. The method of slaking according to any of claims 1 to 3, wherein said metal nitrates and said metal halides, include at least one atom of a metal selected from the group consisting of aluminum and magnesium.

10. The method of slaking according to any of claims 1 to 9, wherein said additive is added to said slaking aqueous phase prior to said supply of said slaking aqueous phase to form an additivated slaking aqueous phase.

11. The method of slaking according to any of claims 1 to 10, wherein said additive is added to said slaking aqueous phase in said slaking equipment or in said supply of said slaking aqueous phase.

12. The method of slaking according to any of claims 1 to 11, wherein said additive is added to said compound containing MgO or in said supply of said calcium-magnesium compound.

13. The method of slaking according to any of claims 1 to 12, wherein said additive is supplied at a content of between 0.1% and 20%, preferably between 1 and 10 % by weight relative to the total weight of MgO.

14. The method of slaking according to any of claims 1 to 13, wherein said calcium-magnesium compound has a conversion rate of MgO to $Mg(OH)_2$ of at least 10%, preferably greater than 15% and particularly preferably greater than 20%, according to a simplified test for determining conversion rates.

15. The method of slaking according to any of claims 1 to 14, wherein said slaking equipment is a conventional dry process hydrator.

16. The method of slaking according to any of claims 1 to 13, wherein the conversion rate from MgO to $Mg(OH)_2$ is improved by 30%, preferably 100%, preferably 150% and in a particularly preferential manner of 200% compared to the conversion rate obtained in the absence of additives.

17. The method of slaking according to claim 16, wherein said reaction time is less than five hours, preferably less than two hours, more preferably less than 1 hour, in particular less than 30 minutes and more especially less than 20 minutes.

18. The method of slaking according to any of claims 1 to 17, wherein said calcium-magnesium compound is a powdery compound.

19. The method of slaking according to any of claims 1 to 18, said slaking is a dry or near-dry slaking.

20. The method of slaking according to claim 19, further comprising a step of disintegration or grinding said slaked solid particles.

21. The method of slaking according to any of claims 1 to 20, wherein said slaking aqueous phase has a temperature before slaking of less than 90°C.

22. A calcium-magnesium compound of the formula $xCa(OH)_2.aMgO.bMg(OH)_2.I$ wherein x, a and b represent molar coefficients such that a+b = y, x/(a+b)= x/y is comprised between 0.8 and 1.2 wherein b corresponds to a mass proportion of $Mg(OH)_2$ of between 5 and 50%, and I representing impurities, said calcium-magnesium compound having a specific surface area measured by nitrogen adsorption manometry and calculated according to the BET method greater than or equal to 5 $m^2/g$ and less than or equal to 15 $m^2/g$ and in the form of slaked solid particles of calcium and magnesium hydroxides having a maximum moisture content of 30% by mass.

23. The calcium-magnesium compound according to claim 22, wherein the calco-magnesium is dolime, in particular hydrated or partially hydrated dolime.

24. The calcium-magnesium compround according to claim 22, wherein the molar coefficient b corresponds to a mass proportion of $Mg(OH)_2$ greater than 7%, preferably greater than 10%.

*F i g . 1*

*Fig. 2*

Fig. 3

*Fig. 4*

EP 2 958 856 B1

## RÉFÉRENCES CITÉES DANS LA DESCRIPTION

**Documents brevets cités dans la description**

- FR 2669327 A1
- WO 9209528 A1
- US 3120444 A
- US 1856763 A
- WO 9714650 A

**Littérature non-brevet citée dans la description**

- **BOYNTON.** Chemistry and Technology of Lime & Limestone. Wiley Interscience, 325-326, 374
- **OATES, J.A.H.** Lime and limestone. Wiley-VCH, 1998, 222-223